# EUROPÄISCHE PATENTSCHRIFT

(11) **EP 1 386 385 B1**
(45) Veröffentlichungstag und Bekanntmachung des Hinweises auf die Patenterteilung: **18.04.2007**
(21) Anmeldenummer: 02706734.7
(22) Anmeldetag: 09.02.2002
(51) Int. Cl.: H02K 41/03

(54) **LINEARMOTOR MIT INTEGRIERTER FÜHRUNG**
LINEAR MOTOR COMPRISING AN INTEGRATED GUIDE
MOTEUR LINEAIRE COMPORTANT UN GUIDE INTEGRE

(30) Priorität: 23.04.2001 CH 7582001
(43) Veröffentlichungstag der Anmeldung: 04.02.2004
(73) Patentinhaber: Etel S.A., 2112 Môtiers (CH)
(72) Erfinder: DOMINE, Emmanuel, CH-2014 Bôle (CH); BUBENDORF, Denis, CH-2014 Bôle (CH)
(74) Vertreter: Pleyer, Hans Anno
(86) Internationale Anmeldenummer: PCT/EP2002/001367
(87) Internationale Veröffentlichungsnummer: WO 2002/087061

(56) Entgegenhaltungen:
- DE-A- 19 842 384
- US-A- 5 357 158
- US-A- 5 831 352
- PATENT ABSTRACTS OF JAPAN vol. 010, no. 082 (E-392), 2. April 1986 (1986-04-02) & JP 60 226762 A (TSUBAKIMOTO SEIKOU:KK), 12. November 1985 (1985-11-12)

## Beschreibung

Die Erfindung betrifft einen Linearmotor mit integrierter Führung nach Anspruch 1.

Ein Linearmotor bietet für viele Anwendungen, in denen letztlich lineare Bewegungen ausgeführt werden müssen, als Direktantrieb entscheidende Vorteile gegenüber einem herkömmlichen rotatorischen Antrieb. Da keine mechanischen Elemente wie beispielsweise Kugelspindeln oder Zahnriemen zur Umsetzung einer Drehbewegung in eine Linearbewegung benötigt werden, ist die mögliche Verfahrgeschwindigkeit und die Positioniergenauigkeit eines solchen Direktantriebes nicht unnötig beschränkt. Geschwindigkeit und Kraft können dabei über einen weiten Bereich geregelt werden, Probleme mit Umkehrspiel treten bei der Positionierung nicht auf. Auch bei sehr schnellen und häufigen Richtungswechseln tritt bei linearen Direktantrieben vergleichsweise wenig Verschleiß auf, so daß die Lebensdauer im Vergleich zu rotatorischen Antrieben steigt und dabei die Positioniergenauigkeit mit der Betriebszeit nicht abnimmt.

Diese Eigenschaften lassen Linearmotoren z.B. für Pick-and-Place - Applikationen interessant erscheinen. Hier müssen beispielsweise einzelne elektronische Schaltungen (Chips) einer zersägten Siliziumscheibe (Wafer) aufgenommen und in ein Gehäuse eingesetzt werden. Da die Chips sehr klein sind, können etliche zehntausend Chips auf einem Wafer üblicher Größe Platz finden. Ein Greifarm muß also einerseits sehr schnell arbeiten können (mehrere Chips pro Sekunde), und andererseits sehr exakt positioniert werden, um die Chips beim Aufnehmen nicht zu beschädigen und mit der zur Weiterverarbeitung nötigen Genauigkeit positionieren zu können.

Um die Integration eines Linearmotors in eine Applikation zu erleichtern, sind Systeme sinnvoll, die den Linearmotor mit einer Linearführung der für die Applikation benötigten Genauigkeit kombiniert. Dies trägt dazu bei, die Kosten einer Lösung mit Linearmotor zu senken, ein wichtiger Faktor, der dem breiten Einsatz von Linearmotoren bisher entgegenstand.

Die DE 198 42 384 A1 beschreibt einen Linearmotor, bei dem das Sekundärteil in Form einer Reihe von Permanentmagneten in einem Führungsgehäuse befestigt ist. Es ist bereits angedeutet, daß dies mittels einer formschlüssigen Verbindung erfolgen kann, Details hierzu sind nicht offenbart. Das Führungsgehäuse weist weiter zusätzliche Führungsschienen auf, die mittels Schrauben am Führungsgehäuse befestigt sind und auf denen ein Laufwagen mit integriertem Primärteil abgestützt ist. Die für die exakte Positionierung des Laufwagens notwendige genaue Ausrichtung der Schienen zum Führungsprofil verursacht einen erheblichen Aufwand, der die Kosten eines solchen Systems erhöht.

Auch die US 5831352 beschreibt die Verwendung von separaten Führungsschienen, die mit einem Teil eines Linearmotors verschraubt sind. Auch hier gilt, dass das Ausrichten und Verbinden der Linearführungen mit den Elementen des Linearmotors einen erheblichen Aufwand bedeutet.

Die US 5357158 beschreibt einen Linearmotor, bei dem das Primärteil in Form einer Reihe von Spulen in einem Führungsgehäuse verschraubt oder verklebt ist. Linearführungen des einstückig ausgeführten Laufwagens sind seitlich außerhalb des Führungsgehäuses angeordnet und stützen sich über Lagerelemente an diesem ab. Zum Abnehmen des Laufwagens vom Führungsgehäuse muss der Laufwagen vom Führungsgehäuse abgezogen werden, was unter Umständen problematisch sein kann.

Aufgabe der Erfindung ist es, einen Linearmotor mit integrierter Führung anzugeben, der kostengünstig zu fertigen ist und dennoch eine genaue Positionierung des Primärteils im Laufwagen gegenüber dem Sekundärteil ermöglicht.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Es wird nunmehr ein Linearmotor mit integrierter Führung vorgeschlagen, dessen Primärteil an einem Laufwagen einer Führung befestigt ist, und dessen Sekundärteil an einem Führungsprofil mittels einer formschlüssigen Verbindung befestigt ist. Das Führungsprofil weist dabei seitliche Führungsflächen auf, die seitlich und außerhalb des Führungsprofils angeordnete Führungsteile des Laufwagens über Lagerelemente abstützen und längs des Führungsprofiles verschiebbar halten. Die seitlichen Führungsteile sind lösbar mit dem Laufwagen verbunden.

Während also im zitierten Stand der Technik herkömmliche Linearführungen aus Schiene und Schlitten verwendet werden, wobei der Laufwagen auf den Führungsschlitten befestigt ist, bildet nach der Erfindung das Führungsprofil selbst die Schiene und der Laufwagen mit seinen seitlichen Führungsteilen den Schlitten. Es wird also auf vormontierte Führungen verzichtet, was einerseits Kosten spart und andererseits die Exaktheit der Führung zwischen Primär- und Sekundärteil sicherstellt.

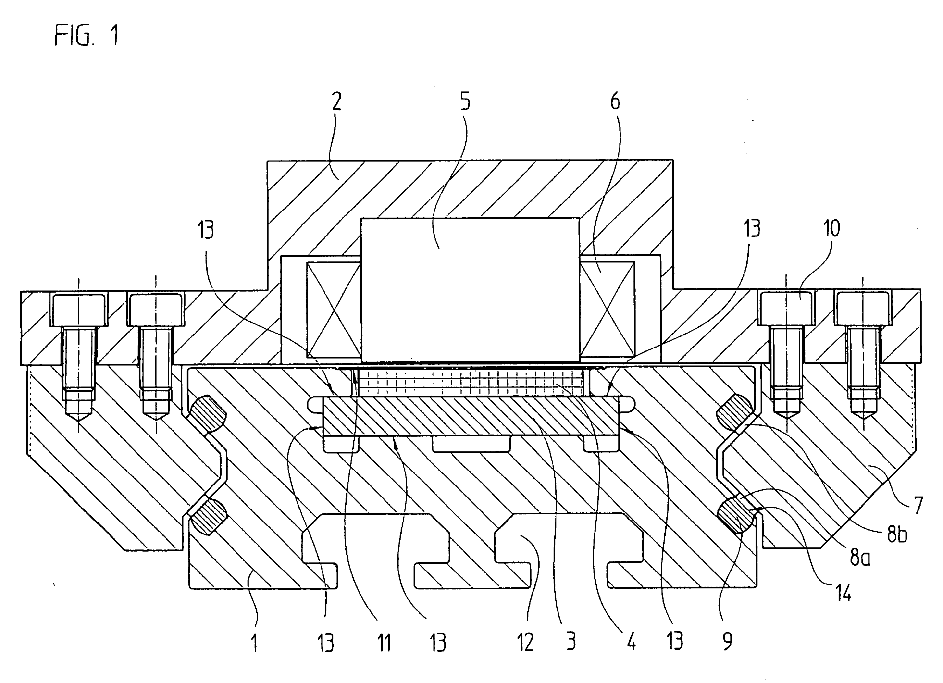

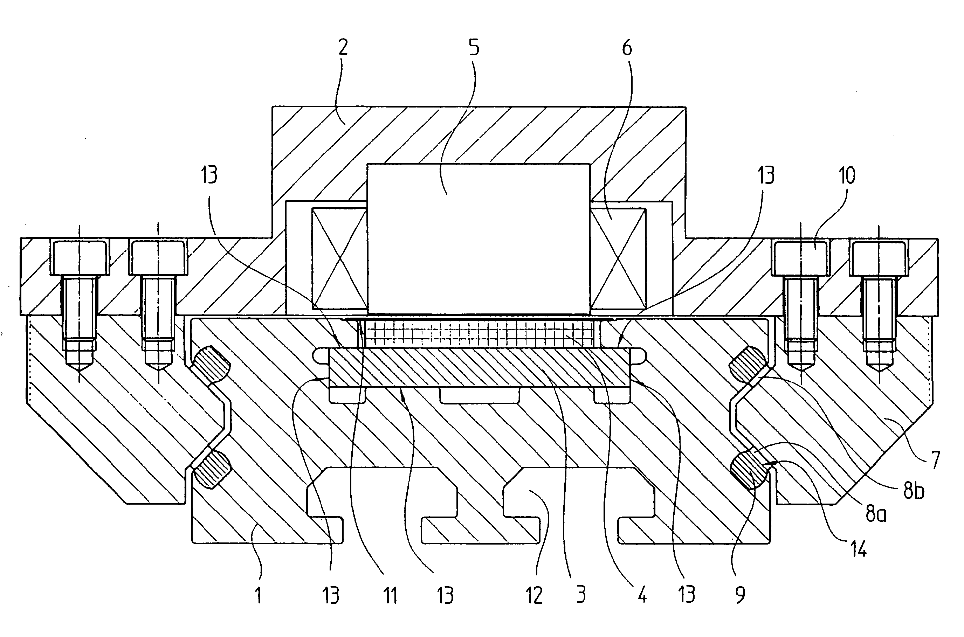

Weitere Vorteile sowie Einzelheiten der vorliegenden Erfindung ergeben sich aus der nachfolgenden Beschreibung einer bevorzugten Ausführungsform anhand der
Figur 1, die einen Querschnitt durch das Führungsprofil und den Laufwagen des Linearmotors mit integrierter Führung zeigt.

Der Linearmotor mit integrierter Führung ist in Figur 1 im Querschnitt dargestellt. Er besteht aus einem Führungsprofil 1, das sich über die Länge des benötigten linearen Fahrbereichs erstreckt, also senkrecht zur Zeichenebene der Figur 1. Das Führungsprofil 1 besteht vorzugsweise aus Metall, um die nötige Stabilität zu gewährleisten, insbesondere Strangpressprofile aus Aluminium sind vorteilhaft wegen ihrer kostengünstigen Herstellbarkeit und ihres geringen Gewichtes. Das Führungsprofil 1 weist auf seiner Unterseite Ausnehmungen 12 auf, die eine Befestigung des Führungsprofiles 1 auf einer nicht gezeichneten Basis erlauben.

Auf der Oberseite der Führung ist ein Magnetträger 3 befestigt. Dies wird in besonders vorteilhafter Weise dadurch erzielt, daß im Führungsprofil 1 Anschläge 13 vorgesehen sind, die bei der Montage des Linearmotors ein Einschieben des Magnetträgers 3 in das Führungsprofil 1 erlauben. Die Anschläge 13 wirken dabei so, daß der Magnetträger 3 bereits in alle Richtungen (außer in der Richtung der Linearbewegung senkrecht zur Zeichenebene) durch formschlüssige Verbindungen gehalten wird. Die Befestigung in dieser letzten freien Richtung kann durch nicht dargestellte Abschlußplatten an den Enden des Führungsprofils 1 erfolgen.

Für längere Führungsprofile 1 kann es schwierig werden, den Magnetträger 3 in das Führungsprofil 1 einzuschieben. Es bietet sich dann an, weniger Anschläge 13 zu benutzen und die dadurch entstehenden Freiheitsgrade durch ein Verkleben mit den verbleibenden Anschlägen 13 zu eliminieren. Auch ein Vergießen des Magnetträgers 3 mit dem Profil ist denkbar. Eine Montage des Magnetträgers nach einer der beschriebenen Methoden senkt die Kosten im Vergleich zu herkömmlichen Linearmotoren mit verschraubtem Sekundärteil erheblich.

Auf dem Magnetträger 3 sind mit abwechselnder Polarität Permanentmagnete 4 befestigt, die zusammen mit dem als magnetischer Rückschluß wirkenden Magnetträger 3 das Sekundärteil des Linearmotors bilden. Oberhalb der Permanentmagnete 4 ist eine Abdeckung 11 angeordnet, die die Öffnung zur Aufnahme des beschriebenen Sekundärteils am Führungsprofil 1 verschließt. Dies verhindert, daß sich Schmutz in den schwer zugänglichen Bereichen zwischen den Permanentmagneten 4 ansammelt. Die Abdeckung 11 kann beispielsweise als dünnes Stahlblech ausgeführt werden, das durch die Kraft der Permanentmagnete 4 gehalten wird, oder zusätzlich am Führungsprofil 1 verklebt werden.

Auf der Oberseite des Führungsprofiles 1 ist ein Laufwagen 2 angeordnet, in dem sich die Spulenwicklungen 6 des Primärteiles des Linearmotors befinden. Die Spulenwicklungen 6 können dabei ohne magnetischen Kern ausgebildet sein, oder wie in der Figur um einen Eisenkern 5 gewickelt sein. Der Eisenkern 5 ist dabei im Laufwagen verklebt, oder für höhere Belastungen verschraubt. Um die Spulenwicklungen 6 mechanisch zu stabilisieren, ist es üblich, diese und ggf. den Eisenkern 5 mit einer Vergußmasse, etwa auf Basis eines Epoxydharzes, zu vergießen (in der Figur nicht dargestellt). Auf der Oberseite des Laufwagens 2 können Bohrungen oder Ausnehmungen zur Befestigung einer Nutzlast dienen.

Der Laufwagen 2 weist seitliche Führungsteile 7 auf, die beidseitig und au-ßerhalb des Führungsprofils 1 angeordnet sind. Lagerelemente 8a, 8b der Führungsteile 7 stützen sich dabei an seitlichen Laufflächen 14 des Führungsprofils 1 ab und halten den Laufwagen 2 längs des Führungsprofils 1 beweglich. Das Primärteil aus Eisenkern 5 und Spulenwicklungen 6 wird so im immer gleichen Abstand gegenüber dem Sekundärteil aus Magnetträger 3 und Permanentmagneten 4 linear geführt. Laufwagen 2 und seitliche Führungsteile 7 können vorteilhaft aus Aluminium gefertigt sein.

Besonders vorteilhaft ist in dieser Ausführung, daß auf separate Linearführungen mit Schiene und Schlitten verzichtet wird. Vielmehr bildet das Führungsprofil 1 selbst die Schiene und der Laufwagen 2 zusammen mit den seitlichen Führungsteilen 7 den Schlitten einer Linearführung. Die Anschläge 13 und seitlichen Laufflächen 14 weisen durch die Integration in das Führungsprofil 1 von sich aus eine gute Parallelität auf, wodurch eine genaue Führung zwischen Primär- und Sekundärteil des Linearmotors erzielt wird, ohne die bei Verwendung von separaten Linearführungen notwendige und kostspielige genaue Ausrichtung zwischen Linearführungen und Führungsprofil 1.

Die Lagerelemente 8a, 8b können beispielsweise walzenförmige Rollen aus Stahl sein, die so angeordnet sind, daß sie zusammen alle Kräfte, die auf den Laufwagen 2 wirken, aufnehmen können, außer dem Vorschub des Linearmotors selbst. Die Rollen sind dabei auf einer Achse drehbar gelagert.

Zum besseren Verständnis seien anhand der Figur 1 Richtungen definiert: Eine gedachte Verbindung zwischen den beiden seitlichen Führungsteilen 7 sei waagrecht, die Verbindung zwischen der Oberseite und der Unterseite des Führungsprofils 1 sei senkrecht. Senkrecht auf der Zeichenebene steht die Richtung der Linearbewegung des Linearmotors und damit auch die Ausdehnung des im Schnitt dargestellten Führungsprofils 1.

Die Laufflächen 14 sind nun so gegeneinander und zur Senkrechten gekippt, daß jeweils beide Laufflächen 14 einer Seite des Führungsprofils 1 waagrechte Kraftkomponenten in einer gemeinsamen Richtung, und jeweils senkrechte Kraftkomponenten in unterschiedlicher Richtung aufnehmen können. Um eine gleichmäßige Belastung der Laufflächen 14 und zugeordneter Lagerelemente 8a, 8b zu erreichen, ist es vorteilhaft, wenn die Laufflächen einerseits untereinander ungefähr einen Winkel von 90 Grad einschließen und andererseits zur Waagrechten bzw. Senkrechten Verkippungen um ungefähr 45 Grad aufweisen.

In der Figur erkennt man an jedem seitlichen Führungsteil untere und obere Lagerelemente 8a bzw. 8b, von denen jeweils mehrere in Richtung der Linearbewegung hintereinander angeordnet sein können. Dabei ist es vorteilhaft, für seitliche Laufflächen 14, die höhere Kräfte aufnehmen müssen als andere seitliche Laufflächen 14, entsprechend mehr Lagerelemente 8a, 8b vorzusehen. In der bevorzugten und in der Figur dargestellten Ausführungsform sind an jedem seitlichen Führungsteil 7 vier untere Lagerelemente 8a, aber jeweils nur zwei obere Lagerelemente 8b in Form von hintereinander angeordneten Rollen vorgesehen. Durch die Anziehungskraft zwischen den Permanentmagneten 4 und dem Eisenkern 5 sind die unteren Lagerelemente 8a nämlich stärker belastet als die oberen Lagerelemente 8b, die in der gezeichneten Einbaulage lediglich Kräfte aufnehmen müssen, die ein Abheben oder Abkippen des Laufwagens 2 vom Führungsprofil 1 bewirken könnten.

Um einen frühzeitigen Verschleiß der seitlichen Laufflächen 14 zu vermeiden, ist es bei einem aus Aluminium bestehenden Führungsprofil 1 sinnvoll, die seitlichen Laufflächen 14 zu verstärken. Dies wird beispielsweise dadurch erreicht, daß Stahleinlagen 9 in Nuten des Führungsprofils eingepresst werden.

Ein weiteres vorteilhaftes konstruktives Detail der bevorzugten Ausführungsform besteht darin, daß die seitlichen Führungsteile 7 mit dem Laufwagen 2 mittels der Schrauben 10 lösbar verbunden sind. Dies gestattet, den Laufwagen 2 durch Demontage von wenigstens einem seitlichen Führungsteil 7 vom Führungsprofil 1 abzunehmen, ohne dabei eine spezielle Position (etwa ein Ende des Führungsprofils 1) anfahren zu müssen. Dabei werden auch die Lagerelemente 8a, 8b einer Wartung zugänglich, während im Stand der Technik nach Demontage des Laufwagens die Schlitten der Linearführungen weiter auf ihren Schienen verbleiben. Dies kann für Wartungszecke in der jeweiligen Applikation von Nutzen sein, wenn etwa nach einer Kollision die Führung nicht mehr bewegt werden kann.

Die beschriebenen konstruktiven Merkmale lassen sich sinnvoll natürlich auch für Anwendungen einsetzen, bei denen Primär- und Sekundärteil vertauscht sind, indem im Führungsprofil Spulenwicklungen 6 auf einem Träger sowie im Laufwagen 2 Permanentmagnete 4 angeordnet sind. Der Ersatz der Permanentmagnete 4 durch Elektromagnete ist für beide Varianten durchaus denkbar.

## Patentansprüche

1. Linearmotor mit integrierter Führung, dessen Primärteil mit einem Laufwagen (2) der Führung verbunden ist, und dessen Sekundärteil mit einem als Strangpressprofil ausgebildeten Führungsprofil (1) durch eine formschlüssige Verbindung verbunden ist, wobei die formschlüssige Verbindung das Sekundärteil (3, 4) in allen Richtungen außer in einer Bewegungsrichtung des Linearmotors hält, wobei seitlich und außerhalb des Führungsprofiles (1) angeordnete Führungsteile (7) des Laufwagens (2) Lagerelemente (8a, 8b) aufweisen, die sich an seitlichen Laufflächen (14) des Führungsprofiles (1) abstützen und die den Laufwagen (2) längs des Führungsprofils (1) verschiebbar halten, und die seitlichen Führungsteile (7) lösbar mit dem Laufwagen (2) verbunden sind.

2. Linearmotor nach Anspruch 1, **dadurch gekennzeichnet, daß** die Lagerelemente (8a, 8b) Rollen sind.

3. Linearmotor nach Anspruch 1 oder 2, **dadurch gekennzeichnet, daß** auf seitlichen Laufflächen (14), die höhere Kräfte aufnehmen müssen als andere seitliche Laufflächen (14), zusätzliche Lagerelemente (8a, 8b) abgestützt sind.

4. Linearmotor nach Anspruch 3, **dadurch gekennzeichnet, daß** an jedem seitlichen Führungsteil (7) je vier untere Lagerelemente (8a) und zwei obere Lagerelemente (8b) vorhanden sind.

5. Linearmotor nach einem der Ansprüche 1 - 4, **dadurch gekennzeichnet, daß** das Führungsprofil (1) aus Aluminium besteht.

6. Linearmotor nach Anspruch 5, **dadurch gekennzeichnet, daß** die seitlichen Laufflächen (14) aus in das Führungsprofil (1) gepreßten Stahleinlagen (9) bestehen.

7. Linearmotor nach einem der vorhergehenden Ansprüche, **dadurch gekennzeichnet, daß** das Sekundärteil aus einem Magnetträger (3) und darauf mit abwechselnder Polarität angeordneten Permanentmagneten (4) besteht.

8. Linearmotor nach einem der vorhergehenden Ansprüche, **dadurch gekennzeichnet, daß** das Sekundärteil mit einer Abdeckung (11) abgedeckt ist.

9. Linearmotor nach Anspruch 8, **dadurch gekennzeichnet, daß** die Abdeckung (11) aus einem Stahlblech besteht.

10. Linearmotor nach einem der vorhergehenden Ansprüche, **dadurch gekennzeichnet, daß** das Primärteil Spulenwicklungen (6) enthält.

11. Linearmotor nach Anspruch 10, **dadurch gekennzeichnet, daß** die Spulenwicklungen (6) auf einen Eisenkern (5) gewickelt sind.

12. Linearmotor nach Anspruch 10 oder 11, **dadurch gekennzeichnet, daß** das Primärteil vergossen ist.

## Claims

1. Linear motor with integrated guide, the primary part of which is connected to a running wagon (2) of the guide, and the secondary part of which is connected by means of a form-fitting connection to a guide profile (1) which is configured as an extruded profile, the form-fitting connection holding the secondary part (3, 4) in all directions except in a movement direction of the linear motor, guide parts (7) of the running wagon (2), which are disposed laterally and outwith the guide profile (1), having bearing elements (8a, 8b) which are supported on lateral running faces (14) of the guide profile (1) and hold the running wagon (2) displaceably along the guide profile (1), and the lateral guide parts (7) being connected detachably to the running wagon (2).

2. Linear motor according to claim 1, **characterised in that** the bearing elements (8a, 8b) are rollers.

3. Linear motor according to claim 1 or 2, **characterised in that**, on lateral running faces (14) which need to absorb higher forces than other lateral running faces (14), additional bearing elements (8a, 8b) are supported.

4. Linear motor according to claim 3, **characterised in that**, on each lateral guide part (7) respectively, four lower bearing elements (8a) and two upper bearing elements (8b) are present.

5. Linear motor according to one of the claims 1 - 4, **characterised in that** the guide profile (1) is made of aluminium.

6. Linear motor according to claim 5, **characterised in that** the lateral running faces (14) comprise steel inserts (9) which are pressed into the guide profile (1).

7. Linear motor according to one of the preceding claims, **characterised in that** the secondary part comprises a magnet carrier (3) and permanent magnets (4) which are disposed thereon with alternating polarity.

8. Linear motor according to one of the preceding claims, **characterised in that** the secondary part is covered with a covering (11).

9. Linear motor according to claim 8, **characterised in that** the covering (11) comprises a steel sheet.

10. Linear motor according to one of the preceding claims, **characterised in that** the primary part contains coil windings (6).

11. Linear motor according to claim 10, **characterised in that** the coil windings (6) are wound onto an iron core (5).

12. Linear motor according to claim 10 or 11, **characterised in that** the primary part is cast.

## Revendications

1. Moteur linéaire à guide intégré, dont la partie primaire est reliée à un chariot (2) du guide et dont la partie secondaire est reliée par complémentarité de formes à un profilé de guidage (1) réalisé sous forme de profilé extrudé, étant entendu que la liaison par complémentarité de formes maintient la partie secondaire (3, 4) dans toutes les directions, sauf dans une direction de déplacement du moteur linéaire, que des pièces de guidage (7) du chariot (2), disposées sur le côté et à l'extérieur du profilé de guidage (1), présentent des éléments d'appui (8a, 8b) qui reposent sur des surfaces de roulement (14) latérales du profilé de guidage (1) et supportent le chariot (2) avec possibilité de translation le long du profilé de guidage (1), et que les parties de guidage (7) latérales sont reliées de façon amovible au chariot (2).

2. Moteur linéaire selon la revendication 1, **caractérisé par le fait que** les éléments d'appui (8a, 8b) sont des galets.

3. Moteur linéaire selon la revendication 1 ou 2, **caractérisé par le fait que** des éléments d'appui (8a, 8b) supplémentaires reposent sur des surfaces de roulement (14) latérales qui doivent supporter des forces plus importantes que d'autres surfaces de roulement (14) latérales.

4. Moteur linéaire selon la revendication 3, **caractérisé par le fait que** chaque partie de guidage (7) latérale comporte quatre éléments d'appui (8a) inférieurs et deux éléments d'appui (8b) supérieurs.

5. Moteur linéaire selon une des revendications 1 à 4, **caractérisé par le fait que** le profilé de guidage (1) est en aluminium.

6. Moteur linéaire selon la revendication 5, **caractérisé par le fait que** les surfaces de roulement (14) latérales sont constituées de garnitures d'acier (9) pressées dans le profilé de guidage (1).

7. Moteur linéaire selon une des revendications précédentes, **caractérisé par le fait que** la partie secondaire est constituée d'un support d'aimants (3) et d'aimants permanents (4) disposés sur celui-ci avec des polarités alternantes.

8. Moteur linéaire selon une des revendications précédentes, **caractérisé par le fait que** la partie secondaire est recouverte d'un élément de recouvrement (11).

9. Moteur linéaire selon la revendication 8, **caractérisé par le fait que** l'élément de recouvrement (11) est formé d'une tôle d'acier.

10. Moteur linéaire selon une des revendications précédentes, **caractérisé par le fait que** la partie primaire contient des enroulements de bobine (6).

11. Moteur linéaire selon la revendication 10, **caractérisé par le fait que** les enroulements de bobines (6) sont enroulés sur un noyau de fer (5).

12. Moteur linéaire selon la revendication 10 ou 11, **caractérisé par le fait que** la partie primaire est scellée.
